# EUROPEAN PATENT APPLICATION

(11) **EP 2 006 328 A1**
(43) Date of publication of application: **24.12.2008**
(21) Application number: 07741121.3
(22) Date of filing: 05.04.2007
(51) Int. Cl.: C08L 23/22, A61J 1/05, B65D 39/04, C08L 23/00, C08L 53/00, C08L 83/05

(54) **COMPOSITION FOR RUBBER STOPPERS AND RUBBER STOPPERS FOR MEDICAL USE**

(30) Priority: 13.04.2006 JP 2006110772
(71) Applicant: Kaneka Corporation, Kita-ku Osaka-shi, Osaka 530-8288 (JP)
(72) Inventor: KIMURA, Katsuhiko, Settsu-shi, Osaka 566-0072 (JP); NAKABAYASHI, Hironari, Settsu-shi, Osaka 566-0072 (JP)
(74) Representative: Vossius & Partner
(86) International application number: PCT/JP2007/057685
(87) International publication number: WO 2007/119687

(57) **Abstract**

It is an object of the present invention to provide: a rubber stopper composition that is easy to mold and process, excellent in sealing properties and gas-barrier properties, low in propensity to elute into the contents, and satisfactory in needle penetration; and a medical rubber stopper made by using the same. The object of the present invention is attained by a composition made up in a predetermined way by dynamically cross-linking an isobutylene-based polymer in the presence of polyolefin with use of a hydrosilyl-group-containing compound and by further adding a softener to the isobutylene-based polymer thus cross-linked, the isobutylene-based polymer having an alkenyl group at a terminal thereof. To the composition of the present invention, a block copolymer consisting of a polymer block (a) composed mainly of an aromatic vinyl-based compound and a polymer block (b) composed mainly of isobutylene or a lubricant can be added.

## Description

### TECHNICAL FIELD

The present invention relates to: rubber stopper compositions suitable for medical rubber stoppers for injection drug containers and the like; and medical rubber stoppers made by using the same. More specifically, the present invention relates to: a rubber stopper composition that is easy to mold and process, excellent in sealing properties and gas-barrier properties, low in propensity to elute into the contents, and satisfactory in needle penetration; and a medical rubber stopper made by using the same.

### BACKGROUND ART

Conventionally, compositions composed mainly of various types of synthetic rubber have been used as rubber compositions for manufacturing medical rubber stoppers such as rubber stoppers for injection drug containers. Among these compositions, butyl-based rubber [based on a polyisobutylene skeleton, such as butyl rubber (isobutylene-isoprene copolymer), chlorinated butyl rubber, brominated butyl rubber, and a bromide of an isobutylene-paramethylstyrene copolymer] is low in permeability to gasses such as oxygen and water vapor and excellent in gas-barrier properties, and therefore has been in practical use as optimum material.

Manufacture of rubber stoppers with use of these types of butyl-based rubber requires use of an additive such as a cross-linking agent (referred to also as a vulcanizing agent) or an auxiliary cross-linking agent. For example, even a comparatively simple cross-linking agent such as organic peroxide leaves a decomposition product or a secondary reaction product in the cross-linked rubber, and such a product remains even after each step of processing rubber stoppers. Especially in the case of butyl-based rubber, these cross-linking and auxiliary cross-linking agents are extremely hard to be diffused, eluted, or emitted in process of manufacture, and therefore are emitted and transuaded out of the system over a long period of time. As such, the butyl-based rubber has a problem of being unsuitable for medical rubber stoppers that are required to have a high level of chemical purity over a long period of time. Further, in general, the crosslinking of rubber requires a hating and pressurizing step to be performed at high temperatures over a long period of time, thus causing a problem of low productivity.

Proposed for the purpose of simplifying this cross-linking step is a technology for quickly molding, with use of an injection molding machine or the like, a thermoplastic elastomer that requires no crosslinking. Examples of such a technology that involves the use of a thermoplastic elastomer include: stoppers (Patent Documents 1 and 2) each consisting of (i) a hydrogenated derivative of a block copolymer consisting of an aromatic vinyl compound and a conjugated diene, (ii) a rubber softener, and (iii) an olefin-based resin; and syringe gaskets (Patent Documents 3 and 4). Since these technologies require no cross-linking step, they yield rubber stoppers low in elution properties. However, each of the rubber stoppers thus yielded has a high coefficient of gas permeability, thus causing a problem of insufficient gas-barrier properties with respect to the content fluid.

Proposed in view of this as a medical sealing article, made by using a thermoplastic elastomer, which has improved gas-barrier properties is a product obtained by using a block copolymer of an aromatic vinyl compound and isobutylene (Patent Document 5). This technology utilizes a polyisobutylene structure similar to that of the conventional butyl rubber. Therefore, the product is excellent in gas-barrier properties. However, the product is insufficient in thermal deformation resistance. Therefore, the product is greatly deformed when sterilized by steam. As such, the product undesirably lacks in practicality.

Further proposed as a medical container stopper, composed of a thermoplastic elastomer, which has improved thermal deformation resistance is a product obtained by dynamically cross-linking isobutylene-isoprene copolymer rubber (butyl rubber) in the presence of an olefin-based resin and a hydrogenated diene-based copolymer (Patent Document 6). However, the technology uses a cross-linking agent or an auxiliary cross-linking agent that has been commonly used in the conventional butyl-based rubber, too. Therefore, the technology still has a problem with elution properties. As such, the technology has yet to solve all the problems.
Patent Document 1: Japanese Unexamined Patent Application Publication No. 37242/1986 *(Tokukaisho* 61-37242)
Patent Document 2: Japanese Examined Patent Application Publication No. 4296/ 1990 (*Tokukohei* 2-4296)
Patent Document 3: Japanese Examined Patent Application Publication No. 17578/1990 *(Tokukohei* 2-17578)
Patent Document 4: Japanese Examined Patent Application Publication No. 17579/1990 *(Tokukohei* 2-17579)
Patent Document 5: Japanese Unexamined Patent Application Publication No. 212104/1993 (*Tokukaihei* 5-212104)
Patent Document 6: Japanese Patent Publication No. 3700215

### DISCLOSURE OF THE INVENTION

### PROBLEMS TO BE SOLVED BY THE INVENTION

It is an object of the present invention to provide: a rubber stopper composition that is easy to mold and process, excellent in sealing properties and gas-barrier properties, low in propensity to elute into the contents, and satisfactory in needle penetration; and a medical rubber stopper made by using the same.

### MEANS TO SOLVE THE PROBLEMS

As a result of accumulation of diligent study to solve the foregoing problems, the inventors have found that the foregoing problems can be solved by using, as a rubber stopper, a composition made up in a predetermined way by dynamically cross-linking an isobutylene-based polymer in the presence of polyolefin with use of a hydrosilyl-group-containing compound and by further adding a softener to the isobutylene-based polymer thus cross-linked, the isobutylene-based polymer having an alkenyl group at a terminal thereof. Thus, the inventors have finally come up with the present invention. That is, the present invention is arranged as follows:
(1) A rubber stopper composition comprising: a composition obtained by cross-linking 100 parts by weight of an isobutylene-based polymer (A) in the presence of 5 to 100 parts by weight of polyolefin (B) during melt kneading with use of a hydrosilyl-group-containing compound (C), the isobutylene-based polymer (A) having an alkenyl group at a terminal thereof; and 1 to 100 parts by weight of a softener (D) (claim 1).
(2) The rubber stopper composition of (1), further comprising 1 to 150 parts by weight of a block copolymer (E) consisting of a polymer block (a) composed mainly of an aromatic vinyl-based compound and a polymer block (b) composed mainly of isobutylene (claim 2).
(3) The rubber stopper composition as set forth in (1) or (2), further comprising 0.1 to 20 parts by weight of a lubricant (F) (claim 3).
(4) The rubber stopper composition as set forth in any one of (1) to (3), wherein a molar ratio of an amount of the hydrosilyl group contained in the hydrosilyl-group-containing compound (C) to an amount of the alkenyl group contained in the isobutylene-based polymer (A) (hydrosilyl group/alkenyl group) falls within a range of 0.5 to 10 (claim 4).
(5) The rubber stopper composition as set forth in any one of (1) to (4), wherein the polyolefin (B) is at least one type selected from polyethylene and polypropylene (claim 5).
(6) The rubber stopper composition as set forth in any one of (1) to (5), wherein the softener (D) is polybutene.
(7) The rubber stopper composition as set forth in any one of (2) to (6), wherein the block copolymer (E) contains 10 to 40% by weight of the polymer block (a) (claim 7).
(8) The rubber stopper composition as set forth in any one of (3) to (7), wherein the lubricant (F) is at least one type selected from the group consisting of fatty acid amide, paraffinic wax, and silicone oil (claim 8).
(9) A rubber stopper made of a composition as set forth in any one of (1) to (8) (claim 9).
(10) A medical rubber stopper made of a composition as set forth in any one of (1) to (8) (claim 10).
(11) An injection drug container rubber stopper made of a composition as set forth in any one of (1) to (8) (claim 11).

### EFFECTS OF THE INVENTION

Because of the excellent flexibility and gas-barrier properties of an isobutylene-based polymer, a medical stopper made of a composition of the present invention not only exhibits good shape-following properties at the time of sealing, but also is unlikely to suffer from oxidative degradation due to permeation of oxygen through contents such as an injection drug or a decrease in the degree of vacuum of a vacuum blood-drawing tube. Further, since the isobutylene-based polymer has an alkenyl group at a terminal thereof, it is possible to set up a crosslink with use of a hydrosilyl-group-containing compound. This brings a large reduction in component elution from the rubber stopper. Furthermore, the addition of an isobutylene-based block copolymer makes it possible to bring a reduction in occurrence of coring without impairing the gas-barrier properties. This makes it possible to obtain a medical rubber stopper that is easy to mold and process, excellent in sealing properties and gas-barrier properties, low in propensity to elute into the contents, and satisfactory in needle penetration. Therefore, the medical rubber stopper is suitable for a rubber stopper for an injection drug container such as a vial container or a pre-filled syringe, a vacuum blood-drawing tube, or the like.

### BEST MODE FOR CARRYING OUT THE INVENTION

A rubber stopper composition of the present invention is obtained through mixing of: a composition obtained by cross-linking 100 parts by weight of an isobutylene-based polymer (A) in the presence of 5 to 100 parts by weight of polyolefin (B) during melt kneading with use of a hydrosilyl-group-containing compound (C), the isobutylene-based polymer (A) having an alkenyl group at a terminal thereof; and 1 to 100 parts by weight of a softener (D). It should be noted that it is possible, in the present invention, to add the softener (D) before the dynamic crosslinking. That is, the dynamic crosslinking may be performed in the presence of the softener (D). Further, the softener (D) may be added into the other components at a time or in several batches.

As a component (A) of the present invention, the isobutylene-based polymer having an alkenyl group at a terminal thereof refers to a polymer, having an alkenyl group at a terminal thereof, in which an isobutylene-derived unit occupies 50% by weight or more, preferably 70% by weight or more, or more preferably 90% by weight or more. A monomer other than isobutylene is not particularly limited as long as it is a cationically polymerizable monomer. Examples of the monomer include: aromatic vinyls; aliphatic olefins; dienes such as isoprene, butadiene, and divinylbenzene; vinyl ethers; and β-pinene. These monomers may be used alone or in combination of two or more.

The molecular weight of the component (A) is not particularly limited. However, it is preferable that the molecular weight of the component (A) fall within a range of 5,000 to 500,000, or especially preferably 10,000 to 200,000, in terms of the weight-average molecular weight measured by GPC. In cases where the weight-average molecular weight is less than 5,000, there is a tendency toward insufficient expression of mechanical properties or the like. On the other hand, in cases where the weight-average molecular weight exceeds 500,000, there is a tendency toward a decrease in melt-kneading properties and a decrease in reactivity at the time of crosslinking.

The alkenyl group contained in the component (A) of the present invention is not particularly limited as long as it is a group, active in a cross-linking reaction by a hydrosilyl-group-containing compound, which contains a carbon-carbon double bond. Specific examples of the alkenyl group include: aliphatic unsaturated hydrocarbon groups such as a vinyl group, an allyl group, a methyl vinyl group, a propenyl group, a butenyl group, a pentenyl group, and a hexenyl group; and cyclic unsaturated hydrocarbon groups such as a cyclopropenyl group, a cyclobutenyl group, a cyclopentenyl group, and a cyclohexenyl group.

Examples of a method for introducing the alkenyl group to the terminal of the component (A) of the present invention include such a method as disclosed in Japanese Unexamined Patent Application Publication No. 152164/1991 *(*Tokukaihei 3-152164) or Japanese Unexamined Patent Application Publication No. 304909/1995 *(*Tokukaihei 7-304909) for causing a compound having an unsaturated group to react with a polymer having a functional group such as a hydroxyl group and thereby introducing the unsaturated group to the polymer. Further, examples of a method for introducing an unsaturated group to a polymer having a halogen atom include a method for producing a Friedel-Kraft's reaction with alkenyl phenyl ether, a method for producing a substitution reaction with allyltrimethylsilane in the presence of Lewis acid, and a method for introducing a hydroxyl group by a Friedel-Kraft's reaction with various phenols and further producing the aforementioned reaction for introducing an alkenyl group. Among these, it is preferable, from a point of view of reactivity, to introduce an allyl group to a terminal by a substitution reaction of chloride with allyltrimethylsilane.

The amount of the alkenyl group in the component (A) of the present invention can be optionally chosen depending on necessary properties. However, from a point of view of properties after crosslinking, it is preferable that the polymer has at least 0.2 alkenyl groups per molecule, more preferably at least 1.0 alkenyl group per molecule, or most preferably 1.5 alkenyl groups per molecule, at a terminal thereof. If the polymer has less than 0.2 alkenyl groups per molecule, there is a possibility of insufficient progress of the cross-linking reaction.

Usable examples of the polyolefin, which serves as a component (B) of the present invention, include either a homopolymer of α-olefin, a random copolymer of α-olefin, a block copolymer of α-olefin, and a mixture thereof, or a random copolymer of α-olefin with another unsaturated monomer, a block copolymer of α-olefin with another unsaturated monomer, a graft copolymer of α-olefin with another unsaturated monomer, and an oxide, halide, or sulfide of these polymers. These may be used alone or in combination of two or more. Specific examples include: polyethylene-based resins such as polyethylene, an ethylene-propylene copolymer, an ethylene-propylene-nonconjugated diene copolymer, an ethylene-butene copolymer, an ethylene-hexene copolymer, an ethylene-octene copolymer, an ethylene-vinyl acetate copolymer, an ethylene-vinyl alcohol copolymer, an ethylene-ethyl acrylate copolymer, an ethylene-acrylic acid copolymer, an ethylene-methyl acrylate-maleic anhydride copolymer, and chlorinated polyethylene; polypropylene-based resins such as polypropylene, a propylene-ethylene random copolymer, a propylene-ethylene block copolymer, and chlorinated polypropylene; poly-1-butene; polyisobutylene; polymethylpentene; and a (co)polymer of cyclic olefin. Among these, it is preferable, from a point of view of balance between costs and properties, to use polyethylene, polypropylene, or a mixture thereof. Examples of polyethylene include high-density polyethylene, low-density polyethylene, and straight-chain low-density polyethylene. Examples of polypropylene include homopolypropylene, random polypropylene, and block polypropylene. Among these, polypropylene is most preferable from a point of heat resistance.

The polyolefin used herein is not particularly limited in melt flow rate (MFR). However, from a point of view of molding flowability, it is preferable that the MFR fall within a range of 0.1 to 100 (g/10 min), or more preferably 1 to 100 (g/10 min).

In the present invention, the component (B) not only serves as a cross-linking reaction field for the component (A), but also functions to impart molding flowability, heat resistance, mechanical strength, slidability, and the like to the final rubber stopper composition. It is preferable that the component (B) be added in an amount of 5 to 100 parts by weight, more preferably 5 to 80 parts by weight, or most preferably 10 to 50 parts by weight, with respect to 100 parts by weight of the component (A). If the amount of the component (B) is less than 5 parts by weight, there is a tendency toward insufficient molding flowability. If the amount of the component (B) exceeds 100 parts by weight, there is a tendency toward insufficient expression of sealing properties due to impairment of flexibility.

The present invention uses the hydrosilyl-group-containing compound (C) as a cross-linking agent for the component (A). The hydrosilyl-group-containing compound (C) is not particularly limited in usability. However, preferably usable examples of the hydrosilyl-group-containing compound (C) include various types of hydrosilyl-group-containing polysiloxane. Among them, it is preferable to use hydrosilyl-group-containing polysiloxane having 3 or more hydrosilyl groups and 3 to 500 siloxane units, more preferable to use hydrosilyl-group-containing polysiloxane having 3 or more hydrosilyl groups and 10 to 200 siloxane units, or especially preferable to use hydrosilyl-group-containing polysiloxane having 3 or more hydrosilyl groups and 20 to 100 siloxane units. If the number of hydrosilyl groups is less than 3, there is a tendency toward failure to obtain optimum rubber elasticity due to insufficient development of a network by crosslinking. If the number of siloxane units exceeds 500, there is a tendency for polysiloxane to have such a high viscosity as to decrease in dispersibility into the component (A) and thereby cause insufficient progress of the cross-linking reaction. The "polysiloxane units" here refer to the following general formulae (I), (II), and (III):

[Si(R¹)₂O] (I)

[Si(H)(R²)O] (II)

[Si(R²)(R³)O]. (III)

Usable examples of the hydrosilyl-group-containing polysiloxane include compounds such as:
chain polysiloxane represented by general formula (IV) or (V):

   R¹₃SiO-[Si(R¹)₂O]ₐ-[Si(H)(R²)O]_{b}-[Si(R²)(R³)O]_{c}-SiR¹₃ (IV)

   HRⁱ₂SiO-[Si(R¹)₂O]ₐ-[Si(H)(R²)O]_{b}-[Si(R²)(R³)O]_{c}-SiR¹₂H (V)
where R¹ and R² denote a C1-C6 alkyl or phenyl group, R³ denotes a C1-C10 alkyl or aralkyl group, b denotes an integer that satisfies 3 ≤ b, and a, b, and c denote an integer that satisfies 3 ≤ a + b + c ≤ 500; and
cyclic siloxane represented by general formula (VI): 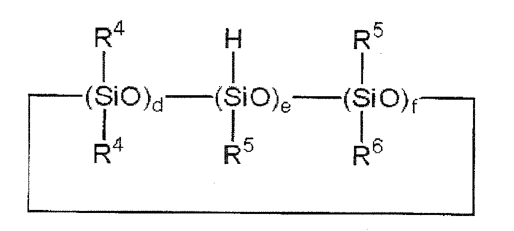
where R⁴ and R⁵ denote a C1-C6 alkyl or phenyl group, R⁶ denotes a C1-C10 alkyl or aralkyl group, e denotes an integer that satisfies 3 ≤ e, and d, e, and f denote an integer that satisfies d + e + f ≤ 500.

The component (A) and the hydrosilyl-group-containing compound can be mixed at any ratio. However, from a point of view of cross-linking speed, it is preferable that the molar ratio of the amount of the hydrosilyl group to the amount of the alkenyl group fall within a range of 0.5 to 10, or more preferably 1 to 5. If the molar ratio is less than 0.5, there is a tendency toward insufficient crosslinking. On the other hand, if the molar ratio is greater than 10, there is a tendency toward generation of volatile portions due to a large amount of active hydrosilyl group that remains after the crosslinking.

The cross-linking reaction between the component (A) and the component (C) is promoted by heating a mixture of the two components. In order to accelerate the reaction, it is preferable to add a hydrosilylation catalyst. Examples of such a hydrosilylation catalyst include, but are not limited to, a radical generator such as organic peroxide or an azo compound and a transition metal catalyst.

Examples of the radical generator include, but are not limited to, dialkylperoxide such as di-t-butylperoxide, 2,5-dimethyl-2,5-di(t-butylperoxy)hexane, 2,5-dimethyl-2,5-di(t-butylperoxy)-3-hexyne, dicumylperoxide, t-butylcumylperoxide, or α,α'-bis(t-butylperoxy)isopropylbenzene; diacylperoxide such as beonzoylperoxide, p-chlorobenzoylperoxide, m-chlorobenzoylperoxide, 2,4-chlorobenzoylperoxide, or lauroylperoxide; peroxy ester such as t-butyl peroxy benzoate; peroxydicarbonate such as di-isopropyl peroxydicarbonate or di-2-ethylhexyl peroxydicarbonate; and peroxyketal such as 1,1-di(t-butylperoxy)cyclohexane or 1,1-di(t-butylperoxy)-3,3,5-trimethylcyclohexane.

Further, examples of the transition metal catalyst include, but are not limited to, a product obtained by dispersing solid platinum onto a support such as elemental platinum, alumina, silica, or carbon black; chloroplatinic acid; a complex of chloroplatinic acid and alcohol, aldehyde, ketone, or the like; a platinum-olefin complex; and a platinum(0)-dialkenyltetramethyldisiloxane complex. Examples of a catalyst other than the platinum compounds include RhCl(PPh₃)₃, RhCl₃, RuCl₃, IrCl₃, FeCl₃, AlCl₃, PdCl₂·H₂O, NiCl₂, and TiCl₄. These catalysts may be used alone or in combination of two or more. Among these, platinum-vinyl siloxane is most preferable from a point of view of cross-linking efficiency.

The catalyst is not limited in amount. However, it is preferable that the amount of the catalyst that is used fall within a range of 10⁻¹ to 10⁻⁸ mol, or more preferably 10⁻³ to 10⁻⁶ mol, with respect to 1 mol of the alkenyl group of the component (A). Below 10⁻⁸ mol, there is a tendency toward insufficient progress of the crosslinking. Above 10⁻¹ mol, there is a tendency toward severe heating that makes it impossible to control the cross-linking reaction.

The present invention dynamically cross-links the component (A) in the presence of the component (B) with use of the component (C) during melt kneading. It is preferable that the melt kneading be performed at a temperature of 130°C to 240°C. At a temperature below 130°C, the component (B) tends to be melt so insufficiently as to be kneaded unevenly. At a temperature above 240°C, the component (A) tends to be thermally decomposed. This dynamic cross-linking step requires the component (A) and the component (B), but may be performed after appropriately adding other components such as the component (D), the component (E), and the component (F). However, the component (F) may inhibit the cross-linking reaction. Therefore, it is preferable that the component (F) be added after the crosslinking. Further, addition of the component (F) after mixing of a cross-linking catalyst into the component (D) tends to cause uniform dispersion and mixing and thereby improves uniformity of the cross-linking reaction. Therefore, such a method is favorably used. The component (E) accelerates mixing of the component (A) and the component (B) and facilitates uniform progress of the cross-linking reaction. Therefore, it is preferable that all or part of the blending quantity of the component (E) be added before the crosslinking. The melt kneading is not particularly limited, and can be performed by applying a publicly-known method. For example, the rubber stopper composition can be produced, for example, by melt-kneading, with use of a heating kneader, the components (A) and (B) and a cross-linking agent, a cross-linking catalyst, and/or other components to be blended to give predetermined properties. Examples of the heating kneader include a single screw extruder, a twin screw extruder, a roller, a Banbury mixer, a Brabender mixer, a kneader, and a high-shear mixer. Further, as for the order of addition, it is preferable to use a method for proceeding with a cross-linking reaction by adding the component (A) after melting the component (B), adding other components if necessary, mixing them uniformly, and adding a cross-linking agent and a cross-linking catalyst.

The present invention uses a softener as the component (D) for the purpose of imparting flexibility and molding flowability. In general, suitably usable examples of the softener are liquid or liquid-like materials at room temperature, although not particularly limited. Examples of such a softener include mineral oil-based, vegetable oil-based, and synthetic softeners for use in rubber and resin. Examples of the mineral oil-based softeners include process oil such as naphthenic oil and paraffinic oil. Examples of the vegetable oil-based softeners include castor oil, cotton oil, flaxseed oil, rapeseed oil, soybean oil, palm oil, copra oil, peanut oil, Japanese wax, pine oil, and olive oil. Examples of the synthetic softeners include polybutene and low-molecular weight polybutadiene. Among these, polybutene is favorably used from a point of view of compatibility with the component (A) and gas-barrier properties. These softeners can be used appropriately in combination of two or more to give the desired hardness and melt viscosity.

It is preferable that the component (D) be blended in an amount of 1 to 100 parts by weight, more preferably 1 to 70 parts by weight, or still more preferably 1 to 40 parts by weight, with respect to 100 parts by weight of the component (A). Above the amount of the component (D) exceeds 100 parts by weight, the softener undesirably tends to elute from the liner material to the contents.

If necessary, for the purpose of improving mechanical properties and coring properties without impairing gas-barrier properties, the present invention can add, as the component (E), a block copolymer consisting of a polymer block (a) composed mainly of an aromatic vinyl-based compound and a polymer block (b) composed mainly of isobutylene.

The polymer block (a) composed mainly of an aromatic vinyl-based compound is a polymer block constituted by 60% by weight, or preferably 80% by weight, of a unit derived from an aromatic vinyl-based compound.

Examples of the aromatic vinyl compound include styrene, o-, m-, or p-methylstyrene, α-methylstyrene, β-methylstyrene, 2,6-dimethylstyrene, 2,4-dimethylstyrene, α-methyl-o-methylstyrene, α-methyl-m-methylstyrene, α-methyl-p-methylstyrene, β-methyl-o-methylstyrene, β-methyl-m-methylstyrene, β-methyl-p-methylstyrene, 2,4,6-trimethylstyrene, α-methyl-2,6-dimethylstyrene, α-methyl-2,4-dimethylstyrene, β-methyl-2,6-dimethyl styrene, β-methyl-2,4-dimethylstyrene, o-, m-, or p-chlorostyrene, 2,6-dichlorostyrene, 2,4-dichlorostyrene, α-chloro-o-chlorostyrene, α-chloro-m-chlorostyrene, α-chloro-p-chlorostyrene, β-chloro-o-chlorostyrene, β-chloro-m-chlorostyrene, β-chloro-p-chlorostyrene, 2,4,6-trichlorostyrene, α -chloro-2,6-dichlorostyrene, α-chloro-2,4-dichlorostyrene, β-chloro-2,6-dichloro styrene, β-chloro-2, 4-dichloro styrene, o-, m- or p-t-butyl styrene, o-, m-, or p-methoxy styrene, o-, m-, or p-chloromethylstyrene, o-, m-, or p-bromomethylstyrene, a styrene derivative substituted by a silyl group, indene, and vinylnaphthalene. Among these, from a point of view of industrial availability and glass-transition temperature, styrene, α-methylstyrene, and a mixture thereof are preferable.

The polymer block (b) composed mainly of isobutylene is a polymer block constituted by 60% by weight, or preferably 80% by weight, of a unit derived from isobutylene.

The polymer blocks (a) and (b) can use each other's monomer and other cationically polymerizable monomer components as copolymer components. Examples of such monomer components include aliphatic olefins, dienes, vinyl ethers, silanes, vinylcarbazole, β-pinene, and acenaphthylene. These can be used alone or in combination of two or more.

Examples of an aliphatic olefin monomer include ethylene, propylene, 1-butene, 2-methyl-1-butene, 3-methyl-1-butene, pentene, hexene, cyclohexene, 4-methyl-1-pentene, vinylcyclohexane, octene, and norbornene.

Examples of a diene monomer include butadiene, isoprene, hexadiene, cyclopentadiene, cyclohexadiene, dichlopentadiene, divinylbenzene, and ethylidene norbornene.

Examples of a vinyl ether monomer include methyl vinyl ether, ethyl vinyl ether, (n-, iso)propyl vinyl ether, (n-, sec-, tert-, iso)butyl vinyl ether, methyl propenyl ether, and ethyl propenyl ether.

Examples of a silane compound include vinyl trichlorosilane, vinyl methyldichlorosilane, vinyl dimethylchlorosilane, vinyl dimethylmethoxysilane, vinyl trimethylsilane, divinyldichlorosilane, divinyl dimethoxysilane, divinyldimethylsilane, 1,3-divinyl-1,1, 3,3-tetramethyldisiloxane, trivinylmethylsilane, γ-methacryloyloxypropyltrimethoxysilane, and γ-methacryloyl oxypropylmethyldimethoxysilane.

The component (E) of the present invention is not particularly limited in structure as long as it is constituted by the block (a) and the block (b). For example, the component (E) can be selected from among block copolymers, diblock copolymers, triblock copolymers, and multiblock copolymers each having a straight-chain, branch, or asteroid structure. From a point of view of properties balance and molding processability, an example of a preferable structure is a triblock copolymer constituted by (a)-(b)-(a). These can be used alone or in combination of two or more to give the desired properties and molding processability.

The ratio between the block (a) and the block (b) is not particularly limited. However, from a point of view of flexibility and rubber elasticity, it is preferable that the component (E) contain 5 to 50% by weight, or more preferably 10 to 40% by weight, of the block (a).

The molecular weight of the component (E) is not particularly limited, either. However, from a point of view of flowability, molding processability, rubber elasticity, and the like, it is preferable that the molecular weight of the component (E) fall within a range of 30,000 to 500,000, more preferably 50,000 to 300,000, in terms of the weight-average molecular weight measured by GPC. In cases where the average-weight molecular weight is lower than 30,000, there is a tendency toward insufficient expression of mechanical properties. On the other hand, in cases where the average-weight molecular weight exceeds 500,000, there is a tendency toward deterioration in flowability and processability.

There is no particular limitation on a method fro producing the component (E). However, the component (E) is obtained, for example, by polymerizing monomer components in the presence of a compound represented by general formula (VII):

(CR⁷R⁸X)ₙR₉ (VII)

where X is a halogen atom or a substituent group selected from C1-C6 alkoxy or acyloxy groups, R⁷ and R⁸ are each independently a hydrogen atom or a C1-C6 monovalent hydrocarbon group, R⁹ is a polyvalent aromatic or aliphatic hydrocarbon group, and n is a natural number of 1 to 6.

The compound represented by general formula (VII) serves as an initiator for triggering cationic polymerization by generating positive carbon ions in the presence of Lewis acid. Examples of the compound represented by general formula (VII) for use in the present invention include the following compounds:
(1-chloro-1-methylethyl) benzene [C₆H₅C(CH₃)₂Cl]; 1,4-bis(1-chloro-1-methylethyl)benzene[1,4-Cl(CH₃)₂CC₆H₄ C(CH₃)₂Cl]; 1,3-bis(1-chloro-1-methylethyl)benzene[1,3-Cl(CH₃)₂CC₆H₄ C(CH₃)₂Cl]; 1,3,5-tris(1-chloro-1-methylethyl) benzene[1,3,5-(ClC(CH₃)₂)₃C₆H₃]; and 1,3-bis(1-chloro-1-methylethyl)-5-(tert-butyl) benzene [1,3-( C(CH₃)₂Cl)₂-5-(C(CH₃)₃)C₆H₃].

Especially preferable among these is bis(1-chloro-1-methylethyl)benzene[C₆H₄(C(CH₃)₂Cl)₂]. It should be noted that bis(1-chloro-1-methylethyl)benzene is referred to also as bis(α-chloroisopropyl)benzene, bis(2-chloro-2-propyl)benzene, or dicumylchloride and that tris(1-chloro-1-methylethyl)benzene is referred to also as tris(α-chloroisopropyl)benzene, tris(2-chloro-2-propyl)benzene, or tricumylchloride.

The component (E) can also be produced in the coexistence of a Lewis acid catalyst. In such a case, any Lewis acid that can be used for cationic polymerization is fine. Suitably usable examples are: metal halides such as TiCl₄, TiBr₄, BCl₃, BF₃, BF₃·OEt₂, SnCl₄, SbCl₅, SbF₅, WCl₆, TaCl₅, VCl₅, FeCl₃, ZnBr₂, AlCl₃, and AlBr₃; and organic metal halides such as Et₂AlCl and EtAlCl₂. Among them, TiCl₄, BCl₃, SnCl₄ are preferable in consideration of ability as a catalyst and industrial availability. The amount of Lewis acid that is used is not particularly limited, and can be set in consideration of the polymerization properties, polymerization concentrations, or the like of monomers that are used. Normally, Lewis acid can be used in a molecularly equivalent amount of 0.1 to 100, or preferably 1 to 50, with respect to the compound represented by general formula (VII).

The component (E) can also be produced in the coexistence of an electron donor component according to need. This electron donor component is thought to have an effect of stabilizing propagating carbon cations in cationic polymerization. The addition of the electron donor component makes it possible to generate a polymer having a narrow molecular weight distribution and a controlled structure. Usable examples of the electron donor component include, but are not particularly limited to, pyridines, amines, amides, sulfoxides, esters, and a metal compound having an oxygen atom bonded with a metal atom.

The component (E) may be polymerized in an organic solvent according to need. Any organic solvent that does not substantially inhibit cationic polymerization can be used without any particular limitation. Specific examples of the organic solvent include: halogenated hydrocarbons such as methyl chloride, dichloromethane, chloroform, ethyl chloride, dichloroethane, n-propyl chloride, n-butyl chloride, and chlorobenzene; alkyl benzenes such as benzene, toluene, xylene, ethylbenzene, propylbenzene, and butylbenzene; straight-chain aliphatic hydrocarbons such as ethane, propane, butane, pentane, hexane, heptane, octane, nonane, and decane; branched aliphatic hydrocarbons such as 2-methylpropane, 2-methylbutane, 2,3,3-trimethylpentane, and 2,2,5-trimethylhexane; cyclic aliphatic hydrocarbons such as cyclohexane, methylcyclohexane, and ethylcyclohexane; and paraffin oil whose petroleum fraction has been purified by hydrogenation.

These solvents may be used alone or in combination of two or more in consideration of balance such as the polymerization properties of the monomer constituting the component (E) and the solubility of the polymer to be generated.

The amount of the above solvent that is used is determined, in consideration of the viscosity of the polymer solution to be obtained and the ease of cooling of the polymer solution, so that the polymer has a concentration of 1 wt% to 50 wt%, or preferably 5 wt% to 35 wt%.

In actual polymerization, each component is mixed with the other while being cooled, for example, at a temperature of -100°C to 0°C. An especially preferably temperature range for balancing polymerization stability against energy cost is from -30°C to -80°C.

It is preferable to mix 1 to 150 parts by weight, more preferably 1 to 100 parts by weight, or most preferably 1 to 50 parts by weight, of the component (E) with respect to 100 parts by weight of the component (A). Above 150 parts by weight, there is a tendency toward deterioration in thermal deformation resistance.

As a component (F) of the present invention, the lubricant, is used mainly for the purpose of imparting slidability and molding processability. Preferable examples of the lubricant include a fatty acid amide lubricant, a fatty acid metal salt lubricant, a fatty acid ester lubricant, a fatty acid lubricant, an aliphatic alcohol lubricant, a partial ester of fatty acid and polyvalent alcohol, a paraffinic lubricant, and a silicone lubricant. It is possible to select and use two or more of them. Examples of the fatty acid amide lubricant include erucic amide, oleic amide, stearic amide, behenic amide, ethylenebisstearic amide, ethylenebisoleic amide, ethylenebiserucic amide, ethylenebislauric amide, m-xylylenebisstearic amide, and p-phenylenebisstearic amide. Examples of the fatty acid metal salt lubricant include calcium stearate, magnesium stearate, aluminum stearate, zinc stearate, and barium stearate. Examples of the fatty acid ester lubricant include methyl laurate, methyl myristate, methyl palmitate, methyl stearate, methyl oleate, methyl erucate, methyl behenate, butyl laurate, butyl stearate, isopropyl myristate, isopropyl palmitate, octyl palmitate, palm fatty acid octyl ester, octyl stearate, special beef tallow octyl ester, lauryl laurate, stearyl stearate, behenyl behenate, cetyl myristate, hardened beef tallow oil, and hardened castor oil. Examples of the fatty acid lubricant include stearic acid, palmitic acid, oleic acid, linoleic acid, and linoleric acid. Examples of the aliphatic alcohol lubricant stearyl alcohol, cetyl alcohol, myristyl alcohol, and lauryl alcohol. Examples of the partial ester of fatty acid and polyvalent alcohol include monoglyceride stearate, diglyceride stearate, and monoglyceride oleate. Examples of the paraffinic lubricant include paraffin wax, liquid paraffin, polyethylene wax, polyethylene oxide wax, and polypropylene wax. Other usable examples of the lubricant include: montanic acid; derivatives thereof, such as montanic acid ester, a montanic acid metal salt, partially saponified montanic acid ester; and silicone oil. These may be used alone or in combination. Among these, from a point of view of an effect of improving slidability and molding processability and an influence on elution properties, it is preferable to use: a paraffinic lubricant such as paraffin wax, polyethylene wax, or polypropylene wax; and a fatty acid amide lubricant, such as stearic amide or erucic amide. Further, concomitant use of silicone oil further improves slidability. For the purpose of improving the mixing dispersibility of silicone oil, silicone oil may be masterbatched with polyolefin. Commercially available examples are Silicone Concentrate BY-27 Series (manufactured by Dow Corning Toray Silicone Co., Ltd.), Silicone Master Pellet X-22 Series (manufactured by Shin-Etsu Chemical Co., Ltd.), and *Hekisashirikonku* ML Series (manufactured by Hexa-Chemical Co., Ltd.).

It is preferable to mix 0.1 to 20 parts by weight, more preferably 0.1 to 10 parts by weight, or still more preferably 0.1 to 5 parts by weight, of the component (F) with respect to 100 parts by weight of the component (A). Above 20 parts by weight, the component (D) undesirably tends to bleed out due to insufficient dispersibility. There is also an undesirable tendency toward degradation in mechanical strength of the resulting composition. On the other hand, below 0.1 parts by weight, there is a tendency toward insufficiency of the effect of improving slidability and molding processability.

The rubber stopper composition of the present invention has excellent gas-barrier properties. However, an oxygen absorbent may be added to the rubber stopper composition to absorb oxygen contained in a container and oxygen dissolved in the contents of the container. As such an oxygen absorbent, a publicly-known oxygen absorbent can be used without limitation. Examples of the oxygen absorbent include: sugars such as ascorbic acid (vitamin C), an ascorbic acid salt, isoascorbic acid, isoascorbic acid salt, gallic acid, a gallic acid salt, propyl gallate, isopropyl citrate, glucose, and fructose; organic oxygen absorbents such as an alkali metal salt of BHT, BHA, or EDTA, tocopherol (vitamin E), hydroquinone, catechol, resorcin, dibutylhydroxytoluene, dibutylhydroxyanisole, pyrogallol, rongalite, sorbose, glucose, and lignin; iron oxygen absorbents such as iron powder, active iron, ferrous oxide, and an iron salt; inorganic oxygen absorbents such as a sulfite salt, a thiosulfate salt, dithionate, and bisulfite; polymer-based oxygen absorbents such as polybutadiene, polyisoprene, a copolymer of polybutadiene and polyisoprene, poly(meta-xylenediamine-adipic acid) (an commercially available example of which is MXD6 manufactured by Mitsubishi Gas Chemical Co., Inc.), a redox resin having an oxidizable (reducing) active group (e.g., poly(ethylene-methylacrylate-benzylacrylate), poly(ethylene-methylacrylate-tetrahydrofurfurylacrylate), poly(ethylene-methylacrylate-cyclohexenylmethylacrylate), or a polyvalent phenol-containing phenol aldehyde resin), and a polymer metal complex; and oxygen adsorbents such as zeolite and active carbon. These may be used alone or in combination of two or more appropriately in accordance with use conditions. In cases where the oxygen absorbent is in powder form, its particle diameter is not particularly limited. In general, it is preferable that the powder oxygen absorbent have a small particle diameter so as to have a large surface area. The oxygen absorbent may contain other substances such as a catalyst, a water retention agent, and a hydrate to control its oxygen absorbing ability. For example, an iron oxygen absorbent can be used in combination with an electrolyte. The electrolyte serves to accelerate the oxygen absorption rate of the iron oxygen absorbent. Examples of the electrolyte include a halide of an alkali metal or an alkali earth metal, a carbonate of an alkali metal or an alkali earth metal, a sulfate salt of an alkali metal or an alkali earth metal, and a hydroxide of an alkali metal or an alkali earth metal. Among them, the halide is preferable, and CaCl₂, NaCl, and MgCl₂ are more preferable. The electrolyte can be used by coating or being blended with the particles of the iron oxygen absorbent. In general, the amount of the electrolyte that is added to the iron oxygen absorbent is approximately 0.1 wt% to 10 wt%. In addition to this, a redox resin for use as a polymer-based oxygen absorbent can be used in combination with a transition metal catalyst for use in an oxidation reaction. An example of the transitional metal catalyst is a metal salt of acetic acid, naphthenic acid, stearic acid, an acetylacetonate complex, or a hydrochloric acid with molybdenum, iron, cobalt, rhodium, or nickel. The redox resin can be used in combination with a photosensitizer. Examples of the photosensitizer include publicly-known photosensitizers such as a cleavage-type photosensitizer and a hydrogen-abstraction-type photosensitizer; however, the hydrogen-abstraction-type photosensitizer is favorably used. Specifically, examples of the cleavage-type photosensitizer include compounds respectively having a benzoin derivative skeleton, a benzylketal, α-hydroxyacetophenone skeleton, and an α-aminoacetophenone skeleton. Examples of the hydrogen-abstraction-type photosensitizer include compounds respectively having a benzophenone skeleton, a Michler's ketone skeleton, an anthraquinone skeleton, and a thioxanthone skeleton. These may be used alone or in combination of two or more.

Further, it is possible to add other thermoplastic resins, a thermoplastic elastomer, rubber, and the like to the rubber stopper composition of the present invention unless they impair the performance of the rubber stopper composition. Examples of thermoplastic resins include polystyrene, an acrylonitrile-styrene copolymer, polymethyl methacrylate, polyvinyl chloride, ABS, MBS, polycarbonate, polyethylene terephthalate, polybutylene terephthalate, polyamide, polyphenylene ether, polysulfone, polyamide imide, and polyetherimide. Examples of thermoplastic elastomers include a styrene-based elastomer, an olefin-based elastomer, a vinyl chloride-based elastomer, a urethane-based elastomer, an ester-based elastomer, and a nylon-based elastomer. Examples of rubber include butyl rubber, natural rubber, butadiene rubber, isoprene rubber, styrene-butadiene rubber (SBR), acrylonitrile-butadiene rubber (NBR), acrylic rubber, and silicone rubber. Among them, polyphenylene ether is favorably used for the purpose of improving the heat resistance of the component (E) in cases where the component (E) is used. Further, a hydrogenated styrene-based elastomer such as SEBS or SEPS is also favorably used for the purpose of adjusting moldability and slidability.

In order to improve molding flowability, it is possible to add a petroleum hydrocarbon resin according to need. The petroleum hydrocarbon resin is a resin, made directly from a petroleum unsaturated hydrocarbon, which has a molecular weight of approximately 300 to 10,000. Examples of the petroleum hydrocarbon resin include an aliphatic petroleum resin, an alicyclic petroleum resin (and a hydride thereof), an aromatic petroleum resin (and a hydride thereof), an aliphatic aromatic copolymer-based petroleum resin (and a hydride thereof), a dicyclopentadiene-based petroleum resin (and a hydride thereof), a low-molecular-weight polymer of styrene or substituted styrene, and a coumarone-indene resin. Among them, an alicyclic saturated hydrocarbon resin is preferable from a point of view of compatibility with the component (A).

Further, it is possible to add a bulking agent to the rubber stopper composition of the present invention for properties improvement and economic advantage. Suitable examples of the bulking agent include: flake-shaped inorganic fillers such as clay, diatom earth, silica, talc, barium sulfate, calcium carbonate, magnesium carbonate, metal oxide, mica, graphite, and aluminum hydroxide; granulated/powdered solid fillers such as various types of metal powder, a piece of wood, glass powder, ceramic powder, carbon black, and a granulated/powdered polymer; and other various types of natural/artificial staple or filament. Further, a reduction in weight can be achieved by blending an inorganic hollow filler, such as a glass balloon or a silica balloon, or an organic hollow filler, such as polyvinylidene fluoride or a polyvinylidene fluoride copolymer. It is possible to mix various foaming agents to achieve a further reduction in weight and further improvements in various properties such as shock absorption. Alternatively, it is possible to mix in a gas mechanically at the time of mixing. Among them, talc is preferable from a point of economical efficiency and good hygiene.

It is preferable that the amount of the filler that is blended fall within a range of 1 to 100 parts by weight, more preferably 1 to 50 parts by weight, or still more preferably 1 to 30 parts by weight, with respect to 100 parts by weight of the component (A). If the amount of the filler that is blended exceeds 100 parts by weight, there is an undesirable tendency to impair the flexibility of the resulting composition.

It is also possible to mix an antioxidant and an ultraviolet absorber with the rubber stopper composition of the present invention according to need. It is preferable that the amount of such a substance that is mixed fall within a range of 0.01 to 10 parts by weight, or more preferably 0.01 to 5 parts by weight, with respect to 100 parts by weight of the component (A). It is also possible to add other additives such as a fire retardant, an antibacterial agent, a light stabilizer, a colorant, a flow improver, an antiblocking agent, and an antistatic agent. These additives can be used alone or in combination of two or more. In particular, because a decrease in hardness causes blocking tend to take place during granulation (pelletization) after melt kneading, it is effective to add an antiblocking agent. Other than the aforementioned examples of the component (F), i.e., the lubricant, and the filler, usable examples of such an antiblocking agent include polypropylene powder, polyethylene powder, and super high-molecular-weight polyethylene powder.

There is no particular limitation on a method for producing the rubber stopper composition of the present invention, and a publicly-known method can be applied. The rubber stopper composition can be produced, for example, by melt-kneading the aforementioned components and, if desired, additive components with use of a heating kneader such as a single screw extruder, a twin screw extruder, a roller, a Banbury mixer, a Brabender mixer, a kneader, or a high-shear mixer. The order in which the components are melt-kneaded is not particularly limited, and can be determined in accordance with the apparatus used, workability, and the properties of the resulting rubber stopper composition.

It is preferable that the hardness of the rubber stopper composition of the present invention fall within a range of 30 to 80, or more preferably 40 to 70, when measured by a type A durometer defined by JIS K-6253 (hereinafter abbreviated as "JIS-A hardness"). If the JIS-A hardness is less than 30, the rubber stopper tends to weaken in material strength, and also tends to increase in friction resistance when put on a container. If the JIS-A hardness exceeds 80, the rubber stopper becomes too hard to make sufficiently close contact with the mouth of a container, and therefore tends to loose sealing properties with respect to the contents of the container.

There is no particular limitation on production of the rubber stopper of the present invention. Commonly-used various molding methods and molding apparatuses can be used in accordance with the type, use, and shape of the intended rubber stopper. Examples of molding methods include given methods such as injection molding, extrusion molding, press molding, blow molding, calender molding, and flow-casting molding. These methods may be combined. Among them, injection molding is most preferable from a point of view of mass productivity and production efficiency. Since the composition of the present invention is thermoplastic, it is possible to reuse runners and sprues. As for conditions for injection molding, it is preferable that the resin temperature be set within a range of 170°C to 250°C. It is possible to favorably use not only a cold runner mold but also a hot runner mold.

Further, the rubber stopper constituted by the composition of the present invention can be used after laminating a fluorocarbon resin or a polyethylene resin on a surface thereof.

Furthermore, the rubber stopper constituted by the composition of the present invention can be used after spreading a lubricant such as silicone oil thereon for the purpose of improving slidability with respect to a vial container or a syringe.

Examples of rubber stoppers for which the composition of the present invention can be used include stoppers and gaskets for injection drug containers, such as vial containers and pre-filled syringes, and vacuum blood-drawing tubes.

### EXAMPLES

The present invention will be described below more in detail with reference to Examples. It should be noted that the present invention is not limited to these Examples, but may be changed unless the gist of the present invention is changed.

The molecular weight of each of the components (A) and (E) of the present example, the number of terminal allyl groups of each of the components (A) and (E), the styrene content of each of the components (A) and (E), and the properties of a rubber stopper composition and a rubber stopper were measured according to the following methods.

### (Molecular Weight)

A GPC system manufactured by Waters (column: Shodex K-804 (polystyrene gel) manufactured by Showa Denko K.K., mobile phase: chloroform) was used, and the weight-average molecular weight was based on polystyrene.

### (Number of Terminal Allyl Groups)

The ¹H-NMR of a solution obtained by dissolving an isobutylene-based polymer in deuterated chloroform was measured, and the number of terminal allyl groups per molecule was measured by calculating the ratio of the allyl groups to the initiator.

### (Styrene Content)

The ¹H-NMR of a solution obtained by dissolving a block copolymer in deuterated chloroform was measured. The molar fraction of styrene was calculated from the ratio between an isobutylene-derived peak (8H) and an aromatic-ring peak (5H), and the molecular weight per unit was converted into a weight percentage, so that the styrene content (% by weight) was calculated.

### (Hardness)

In compliance with JIS K-6253, the hardness of a laminate of three 2-mm-thick press sheets was measured by a spring type A durometer (hereinafter abbreviated as "JIS-A hardness").

### (Compression Set)

In compliance with JIS K-6262, a 12.0-mm-thick press sheet was used as a test piece. The test piece was measured under conditions of 70°C × 22 hours and 25% deformation.

### (Gas-barrier Properties)

In compliance with JIS K-7126, the permeability coefficient of oxygen was measured. A 1-mm-thick press sheet was used as a test piece. A differential pressure method (A method) was used.

### (Thermal Deformation Resistance)

ISO 8362-2 type A rubber stoppers (each having a flange diameter of 20 mm) were heated by a pressure cooker (PC-305S; manufactured by Hirayama Seisakujyo Co., Ltd.) whose temperature had been set to 121°C, and then were checked with eyes for deformations. The water vapor pressure was the pressure of vapor saturated at 121 °C. Those without deformations were judged to be "good". Those with deformations of flanges were judged to be "fair". Those entirely deformed were judged to be "poor". Even the slightest deformation may make it impossible to retain sealing properties. Those judged to be "fair" or "poor" cannot be used as rubber stoppers.

### (Coring Properties)

ISO 8362-2 type A rubber stoppers (each having a flange diameter of 20 mm) were put on vial containers into which purified water has been poured, respectively. After that, whether waste rubber was generated or not was observed by taking out and putting in of an injection needle. As the injection needle, a Terumo injection needle NEOLAS NN-1838R (18G) was used. The injection needle was put in four places per rubber stopper, and the number of waster rubbers generated every 10 rubber stopper (for a total of 40 times) was measured. The number of waste rubbers is allowed to fall within a range of up to 10% (4 waste rubbers).

### (Elution Properties)

The following measurements were performed in compliance with a method of Japanese Pharmacopoeia for testing volumetric rubber stoppers. It is necessary that all the items meet the standards.

### Preparation of a Test Liquid:

A 2-mm-thick press sheet as washed with water and dried at room temperature. The press sheet was put into a hard glass container, and water was poured into the hard glass container accurately in an amount ten times as large as the weight of the test piece. An appropriate stopper was put on the hard glass container. After that, the hard glass container was heated for one hour in an autoclave heated to 121°C. Then, the hard glass container was taken out, and left unattended until it cooled down to room temperature. The press sheet was removed immediately. The liquid thus obtained was used as a test liquid. A blank test liquid was separately prepared in the similar manner except by pouring only water into a hard glass container without putting a press sheet into the hard glass container.

### Transmittance:

In comparison with the blank test liquid, the transmittance of the test liquid was measured at wavelengths of 430 nm and 650 nm with a layer length of 10 mm. The standards are met if the transmittance is 99.0% or more. The unit is %.

### pH:

The pH of the test liquid was measured by taking 20 ml of the test liquid and adding, to the test liquid thus taken, 1.0 ml of 1000 ml of a liquid obtained by dissolving 1.0 g of potassium chloride in water. The pH of the blank test liquid was measured in the same manner. The standards are met if the difference in pH between the liquids is 1.0 or less.

### Potassium Permanganate Reducing Substance:

The test liquid was taken in an amount of 100 ml into a stoppered conical flask, and 10.0 ml of 0.01 N potassium permanganate liquid and 5 ml of dilute sulfuric acid were added to the test liquid thus taken. The mixture thus obtained was boiled for three minutes and then cooled down. After that, 0.10 g of potassium iodide were added to the mixture, and the mixture was sealed in, shaken up, and left unattended for ten minutes. After that, the mixture was titrated with 0.01 N sodium thiosulfate (indicator: five drops of starch test liquid). The blank test liquid was separately used in an amount of 100 ml to perform a simultaneous operation. The difference in consumption of 0.01 N potassium permanganate liquid was measured. The standards are met if the difference in consumption of 0.01 N potassium permanganate liquid is 2.0 ml or less. The unit is ml.

### Evaporation Residue:

The test liquid was taken in an amount of 100 ml, and the test liquid thus taken was evaporated to dryness on a water bath. The residue thus obtained was dried for one hour at 105°C. The weight of the residue was measured. The standards are met if the residue has a weight of 2.0 mg or less. The unit is mg.

### Ultraviolet Absorption:

In comparison with the black test liquid, the test liquid was tested according to a method for determination of absorbance. The standards are met if the absorbance at wavelengths of 220 nm to 350 nm is 0.20 or less.

A rubber stopper composition was produced with use of the following materials:

### Component (A) Isobutylene-based polymer having an alkenyl group at a terminal thereof

### Produced in Example of Production 1 described below

### Component (B) Polyolefin

Polypropylene (homo type): MITSUI POLYPRO J108M (MFR: 45 g/10 min, hereinafter abbreviated as "HPP") manufactured by Mitsui Chemicals, Inc.

Polypropylene (random type): MITSUI POLYPRO J215W (MFR: 9 g/10 min, hereinafter abbreviated as "RPP") manufactured by Mitsui Chemicals, Inc.

### Component (C) Hydrosilyl-group-containing Compound

### (Cross-linking Agent)

### Hydrosilyl-group-containing polysiloxane

Polysiloxane represented by the following chemical formula (hereinafter abbreviated as "H-oil"):

(CH₃)₃SiO-[Si(H)(CH₃)O]₄₈-Si(CH₃)₃

### Cross-linking Catalyst

Zerovalent platinum complex of 1,1,3,3-tetramethyl-1,3-dialkenyldisiloxane, 3 wt% xylene solution (hereinafter abbreviated as "Pt catalyst")

### Component (D) Softener

Polybutene: Idemitsu Polybutene 100R (hereinafter referred to as "100R") manufactured by Idemitsu Kosan Co., Ltd.

Paraffinic oil: Dyana Process PW-90 (hereinafter abbreviated as "PW90") manufactured by Idemitsu Kosan Co. Ltd.

### Component (E) Isobutylene-based Block Copolymer

Produced in Example of Production 2 described below Component (F) Lubricant

Polyethylene wax: Licowax PE520 (hereinafter abbreviated as PE520) manufactured by Clariant (Japan) K.K.

### Thermoplastic Elastomer

Hydrogenated styrene-butadiene-based block copolymer: Kraton G1650 (having a styrene content of 29%; hereinafter abbreviated as "SEBS") manufactured by Kraton Polymers Japan, Ltd.

Butyl-based dynamically cross-linked elastomer: Trefsin 3271-65W308 (hereinafter abbreviated as "TREF") manufactured by AES Japan, Ltd.

### (Example of Production 1) (A) Isobutylene-based Polymer Having an Alkenyl Group at a Terminal Thereof (hereinafter abbreviated as "APIB")

Nitrogen substitution was performed with a three-way cock, a thermocouple, and a stirring seal attached to a 2 L separable flask. After the nitrogen substitution, the three-way cock was used to cause nitrogen to flow. A syringe was used to add 785 ml of toluene and 265 ml of ethyl cyclohexane thereto. The 2 L separable flask was cooled down to approximately -70°C. After the cooling, 277 ml (2933 mmol) of an isobutylene monomer were added. After the 2 L separable flask was cooled down again to approximately -70°C, 0.85 g (3.7 mmol) of p-dicumylchloride and 0.68 g (7.4 mmol) of picoline were added by being dissolved in 10 ml of toluene. At the point of time where the internal temperature of the reaction system was stabilized at -74°C, polymerization was started by adding 19.3 ml (175.6 mmol) of titanium tetrachloride. After the polymerization reaction had been finished (90 minutes), 1.68 g (11.0 mmol) of a 75%-allyltrimethylsilane/toluene solution were added, and reacted further for two hours. Thereafter, deactivation was performed with purified water heated to approximately 50°C. Furthermore, the organic layer was washed with purified water (70°C to 80°C) three times, and the organic solvent was removed at 80°C under reduced pressure. Thus obtained was APIB. The weight-average molecular weight measured by GPC was 50,000, and the number of terminal allyl groups calculated by ¹H-NMR was 2.0/mol.

### (Example of Production 2) (E) Isobutylene-based Block Copolymer, Triblock Structure Having a Styrene Content of 15% (hereinafter abbreviated as "SIBS1")

After a gas contained in a 500 ml separable flask serving as a polymer container was replaced with nitrogen, 21.2 ml of n-hexane (dried by a molecular sieve) and 256.6 ml of butyl chloride (dried by a molecular sieve) were added thereto with use of a syringe. The polymer container was cooled down in a -70°C dry ice/methanol bath. After that, a Teflon (registered trademark) solution-sending tube was connected to a three-way-cock-equipped pressure-proof glass liquefaction collection tube containing 60.5 mL of an isobutylene monomer, the isobutylene monomer was sent to the polymer container by nitrogen pressure. After 0.120 g of p-dicumylchloride and 0.121 g of N,N-dimethylacetamide had been added, polymerization was started by further adding 1.02 mL of titanium tetrachloride. After 75 minutes of agitation after the start of the polymerization, 8.02 g of a styrene monomer were added into the polymer container. Seventy-five minutes after the addition of the mixed solution, the reaction was finished by adding a large amount of water.

The reaction liquid was washed with water twice. The solvent was evaporated. The polymer thus obtained was dried in a vacuum for 24 hours at 60°C. Thus obtained was an intended block copolymer. The molecular weight was measured by a gel permeation chromatography (GPC) to find that the weight-average molecular weight was 130,000. The styrene content calculated by ¹H-NMR was 15 wt%.

### (Example of Production 3) (D) Isobutylene-based Block Copolymer, Triblock Structure Having a Styrene Content of 30% (hereinafter abbreviated as "SIBS2")

After a gas contained in a 500 ml separable flask serving as a polymer container was replaced with nitrogen, 97.6 ml of n-hexane (dried by a molecular sieve) and 140.5 ml of butyl chloride (dried by a molecular sieve) were added thereto with use of a syringe. The polymer container was cooled down in a -70°C dry ice/methanol bath. After that, a Teflon (registered trademark) solution-sending tube was connected to a three-way-cock-equipped pressure-proof glass liquefaction collection tube containing 47.7 mL (505.3 mmol) of an isobutylene monomer, the isobutylene monomer was sent to the polymer container by nitrogen pressure. After 0.097 g (0.42 mmol) of p-dicumylchloride and 0.073 g (0.84 mmol) of N,N-dimethylacetamide had been added, polymerization was started by further adding 1.66 mL (15.12 mmol) of titanium tetrachloride. After 75 minutes of agitation after the start of the polymerization, approximately 1 mL of the polymerization solution was extracted a sample. Then, 13.71 g (131.67 mmol) of a styrene monomer were added into the polymer container. Seventy-five minutes after the addition of the mixed solution, the reaction was finished by adding a large amount of water.

The reaction liquid was washed with water twice. The solvent was evaporated. The polymer thus obtained was dried in a vacuum for 24 hours at 60°C. Thus obtained was an intended block copolymer. A GPC analysis of the isobutylene-based block copolymer thus obtained was performed to find that the molecular weight was 135,000. Further, The polystyrene content obtained through ¹H-NMR was 30% by weight.

### (Example of Production 4) A Dynamically Cross-linked Composition Composed of the Component (A), the Component (B), and the Component (D) (where the component (B) is RPP and (A)/(B)/(D) = 100/11/40 parts by weight (hereinafter abbreviated as TPV))

APIB (component (A)) obtained in Example of Production 1 and RPP (component (B)) were measured out in amounts of 26.3g and 2.9 g, respectively. APIB and RPP thus measured out were melt-kneaded for two minutes with use of a Labo Plastomill (manufactured by Toyo Seiki Seisaku-sho, Ltd.) set to 170°C. To the mixture, 10.5 g of 100R (component (D)) were added. The mixture was further kneaded for two minutes. Then, to the mixture, 0.32 g (the amount of the hydrosilyl group contained in the compound (C) with respect to the amount of the alkenyl group contained in the component (A) (hydrosilyl group/alkenyl group) is an equivalent weight of 4) of H-oil, serving as a hydrosilyl-group-containing compound, were added. The mixture was kneaded for one minute. After that, 14.8 µl (5×10⁻⁴ mol with respect to 1 mol of an allyl group) of the Pt catalyst, serving as a cross-linking agent, were added. The mixture was further melt-kneaded until the crosslinking proceeded for the value of torque to reach its maximum. After three minutes of kneading after the value of torque had reached its maximum, the dynamically cross-linked composition was taken out.

### (Examples 1 to 4)

TPV produced in Example of Production 4 was blended with the components so that such compositions as shown in Table 1 were finally obtained. Each of the mixtures was melt-kneaded for five minutes with use of a Labo Plastomill (manufactured by Toyo Seiki Seisaku-sho, Ltd.) set to 180°C. The total weight of the components to be poured was adjusted to be 45 g. Each of the kneaded mixtures thus obtained was press-molded for five minutes at 170°C. Thus obtained were products molded into sheets or rubber stoppers. Various properties of the products were evaluated. The evaluation results are shown in Table 1 and Table 2.

### (Comparative Examples 1 to 7)

The same evaluation was carried out as in Examples 1 to 4 except that such compositions as shown in Table 1 were obtained. The results are shown in Table 1 and Table 2. Comparative Example 1 was poor in gas-barrier properties. Comparative Example 6 was too high in hardness to be measured in a range of JIS-A. Comparative Example 7 was low in hardness and exhibited stickiness. As such, Comparative Examples 1, 6, and 7 were judged to be unusable as rubber stoppers. Therefore, Comparative Examples 1, 6, and 7 were neither molded into rubber stoppers nor evaluated.

### (Comparative Example 8)

Melt kneading was performed in the same manner as in Example of Production 4 except that the hydrosilyl-group-containing compound was not added. However, since the crosslinking did not proceed, there was no increase in torque. Thus obtained was a very sticky kneaded mixture. Since it was impossible to mold the kneaded mixture into a sheet, it was also impossible to evaluate properties.

**[Table 1]**

| | | Example 1 | Example 2 | Example 3 | Example 4 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|
| Blending compositions (parts by weight) | | | | | | | | | | | | |
| TPV (Example of Production 4) | | 152.2 | 152.2 | 152.2 | 152.2 | | | | | | 152.2 | 152.2 |
| RPP | | | 14 | | | | | | | | | |
| HPP | | | | 5.1 | 19 | | | | | | 90 | |
| 100R | | | 60 | | | | | | | | | 80 |
| SIBS1 | | | | 16.9 | 101.5 | | | | | | | |
| PE520 | | | 2.3 | 1.7 | 2.7 | | | | | | 2.4 | 2.3 |
| Final compositions (parts by weight) | | | | | | | | | | | | |
| Component (A) | APIB | 100 | 100 | 100 | 100 | | | | | | 100 | 100 |
| Component (B) | RPP | 11 | 25 | 11 | 11 | 25 | | 25 | 15 | | 11 | 11 |
| | HPP | | | 5.1 | 19 | | | | | | 90 | |
| Component (C) | H-oil | 1.2 | 1.2 | 1.2 | 1.2 | | | | | | 1.2 | 1.2 |
| Component (D) | 100R | 40 | 100 | 40 | 40 | | | | | | 40 | 120 |
| | PW90 | | | | | 150 | | 37.5 | | | | |
| Component (E) | SIBS1 | | | | | | | | | | | |
| | SIBS2 | | | | | | 100 | 100 | | | | |
| Component (F) | PE520 | | 2.3 | 1.7 | 2.7 | | | | 100 | | 2.4 | 2.3 |
| Others | SEBS | | | | | 100 | | | | | | |
| | TREF | | | | | | | | | 100 | | |
| Properties of rubber stopper compositions | | | | | | | | | | | | |
| JIS-A hardness | | 44 | 40 | 43 | 47 | 46 | 51 | 48 | 42 | 75 | >95 | 18 |
| Compression set | | 21 | 21 | 31 | 49 | 40 | 65 | 82 | 79 | 40 | NA | NA |
| Coefficient of oxygen permeation* | | 6.5 | 8.2 | 5.8 | 5.2 | 95 | 4.3 | 5.6 | 4.1 | 8.5 | NA | NA |
| Properties as rubber stoppers | | | | | | | | | | | | |
| Thermal deformation resistance | | good | good | good | good | NA | poor | fair | poor | good | NA | NA |
| Coring properties | | 4/40 | 3/40 | 1/40 | 1/40 | NA | 0/40 | 0/40 | 0/40 | 22/40 | NA | NA |
| Elution properties | | qualified | qualified | qualified | qualified | NA | qualified | qualified | qualified | nonqualified | NA | NA |

| | | | | | | | | | | | | |
|---|---|---|---|---|---|---|---|---|---|---|---|---|
| *The unit of a coefficient of oxygen permeation is "× 10⁻¹⁶mol·sec·Pa". | | | | | | | | | | | | |

**[Table 2]**

| | | Example 1 | Example 2 | Example 3 | Example 4 | Comp. Ex. 2 | Comp. Ex. 3 | Comp. Ex. 4 | Comp. Ex. 5 |
|---|---|---|---|---|---|---|---|---|---|
| Elution Properties | | qualified | qualified | qualified | qualified | qualified | qualified | qualified | nonqualified |
| Transmittance (430 nm) | 99% or more | 99.7% | 99.5% | 99.4% | 99.4% | 99.9% | 99.6% | 99.7% | 95.1% |
| Transmittance (650 nm) | 99% or more | 99.8% | 99.3% | 99.3% | 99.4% | 99.9% | 99.5% | 99.6% | 97.8% |
| pH | 1.0 or less | 0.5 or less | 0.5 or less | 0.5 or less | 0.5 or less | 0.5 or less | 0.5 or less | 0.5 or less | 0.5 or less |
| Potassium permanganate reducing substance | 2 ml or less | 0.3 ml | 0.4 ml | 0.4 ml | 0.4 ml | 0.6 ml | 0.5 ml | 0.5 ml | 2.7 ml |
| Evaporation residue | 2 mg or less | 1 mg or less | 1 mg or less | 1 mg or less | 1 mg or less | 1 mg or less | 1 mg or less | 1 mg or less | 3.2 mg |
| Ultraviolet absorption (220 nm) | 0.2 or less | 0.01 | 0.03 | 0.02 | 0.02 | 0.03 | 0.03 | 0.03 | 0.36 |

Examples 1 to 4 were found to satisfy all the properties in performing as medical rubber stoppers, and to have no problem with thermal deformation resistance, coring, or elution properties. Comparative Example 1, in which SEBS was used as an elastomer component, was insufficient in gas-barrier properties. Comparative Examples 2 to 4, none of which contains a dynamically cross-linked composition of the component (A), were insufficient in thermal deformation resistance. Comparative Example 5 (i.e., a thermoplastic elastomer obtained through dynamic crosslinking with use of butyl rubber in the presence of PP), in which a conventional ordinary cross-linking agent was used, failed to meet the official standards in terms of elution properties. Comparative Example 6, in which the amount of the component (B) added exceeds the upper limit of the range of amounts to be added in the present invention, is too hard to be suitably used as a medical rubber stopper. Comparative Example 7, in which the amount of the component (D) added exceeds the upper limit of the range of amounts to be added in the present invention, was not only low in hardness but also bled to stickiness.

As described above, Examples according to the present invention yield the objects of the present invention: a rubber stopper composition that is easy to mold and process, excellent in sealing properties and gas-barrier properties, low in propensity to elute into the contents, and satisfactory in needle penetration; and a medical rubber stopper made by using the same.

## Claims

1. A rubber stopper composition comprising:
a composition obtained by cross-linking 100 parts by weight of an isobutylene-based polymer (A) in the presence of 5 to 100 parts by weight of polyolefin (B) during melt kneading with use of a hydrosilyl-group-containing compound (C), the isobutylene-based polymer (A) having an alkenyl group at a terminal thereof; and
1 to 100 parts by weight of a softener (D).

2. The rubber stopper composition as set forth in claim 1, further comprising 1 to 150 parts by weight of a block copolymer (E) consisting of a polymer block (a) composed mainly of an aromatic vinyl-based compound and a polymer block (b) composed mainly of isobutylene.

3. The rubber stopper composition as set forth in claim 1 or 2, further comprising 0.1 to 20 parts by weight of a lubricant (F).

4. The rubber stopper composition as set forth in any one of claims 1 to 3, wherein a molar ratio of an amount of the hydrosilyl group contained in the hydrosilyl-group-containing compound (C) to an amount of the alkenyl group contained in the isobutylene-based polymer (A) (hydrosilyl group/alkenyl group) falls within a range of 0.5 to 10.

5. The rubber stopper composition as set forth in any one of claims 1 to 4, wherein the polyolefin (B) is at least one type selected from polyethylene and polypropylene.

6. The rubber stopper composition as set forth in any one of claims 1 to 5, wherein the softener (D) is polybutene.

7. The rubber stopper composition as set forth in any one of claims 2 to 6, wherein the block copolymer (E) contains 10 to 40% by weight of the polymer block (a).

8. The rubber stopper composition as set forth in any one of claims 3 to 7, wherein the lubricant (F) is at least one type selected from the group consisting of fatty acid amide, paraffinic wax, and silicone oil.

9. A rubber stopper made of a composition as set forth in any one of claims 1 to 8.

10. A medical rubber stopper made of a composition as set forth in any one of claims 1 to 8.

11. An injection drug container rubber stopper made of a composition as set forth in any one of claims 1 to 8.
